# EUROPEAN PATENT APPLICATION

(11) **EP 2 249 496 A1**
(43) Date of publication of application: **10.11.2010**
(21) Application number: 09706877.9
(22) Date of filing: 22.01.2009
(51) Int. Cl.: H04J 11/00, H04W 52/36, H04W 56/00, H04W 72/04

(54) **TRANSMITTER, RECEIVER, TRANSMISSION METHOD, AND RECEPTION METHOD**

(30) Priority: 01.02.2008 JP 2008022915; 01.02.2008 JP 2008022916; 01.02.2008 JP 2008022917
(71) Applicant: Sharp Kabushiki Kaisha, Osaka-shi, Osaka 545-8522 (JP)
(72) Inventor: KAMENO, Toshiaki c/o SHARP KABUSHIKI KAISHA, Osaka-shi, Osaka 545-8522 (JP); TSUNEKAWA, Kouichi c/o SHARP KABUSHIKI KAISHA, Osaka-shi, Osaka 545-8522 (JP); ISHIKURA, Katsutoshi c/o SHARP KABUSHIKI KAISHA, Osaka-shi, Osaka 545-8522 (JP); KONNO, Yoshio c/o SHARP KABUSHIKI KAISHA, Osaka-shi, Osaka 545-8522 (JP); FUKUMASA, Hidenobu c/o SHARP KABUSHIKI KAISHA, Osaka-shi, Osaka 545-8522 (JP)
(74) Representative: Müller - Hoffmann & Partner
(86) International application number: PCT/JP2009/051004
(87) International publication number: WO 2009/096319

(57) **Abstract**

A transmitter which communicates with a receiver. The transmitter includes a null subcarrier allocation unit which allocates a null subcarrier based on a priority and a signal. The priority is for allocating a null subcarrier to each subcarrier. The priority is a ranking predetermined with the receiver. The signal is allocated to each subcarrier. The transmitter includes a transmission unit which transmits the signal using the subcarrier allocated by the null subcarrier allocation unit as the null subcarrier to the receiver.

## Description

### TECHNICAL FIELD

The present invention relates to a transmitter, a receiver, a transmission method, and a reception method.
Priority is claimed on Japanese Patent Applications No. 2008-022915, No. 2008-022916, and No. 2008-022917, filed on February 1, 2008, the contents of which are incorporated herein by reference.

### BACKGROUND ART

In recent years, mobile communication schemes based on an OFDM (Orthogonal Frequency Division Multiplexing) technique have been studied. Also, mobile communication schemes based on a combination of a communication technique such as CDMA (Code Division Multiplexing Access) and an OFDM technique have been studied.

3GPP (The 3rd Generation Partnership Project) is an organization which develops standards for mobile phones. 3GPP is studying such next generation specifications as LTE (Long Term Evolution). 3GPP is adopting an OFDM technique as a downlink communication scheme in LTE.
In the downlink communication scheme which is being studied in LTE, a reference signal (RS) is transmitted from a transmitter to a receiver for each antenna. The reference signal corresponds to a known symbol (pilot symbol). As such a reference signal, there are three types of (1) cell-specific reference signals, (2) MBSFN reference signals, and (3) UE-specific reference signals. A symbol in which each reference signal is arranged is described in Non-Patent Document 1.
The arrangement of cell-specific reference signals for each transmitter as a base station is considered. The arrangement of cell-specific reference signals is described in Non-Patent Document 1.

The arrangement of downlink reference signals is described in Non-Patent Document 1 and the study of transmission power thereof is in progress. For the transmission power of reference signals, the use of a power boost method is considered. The power boost is a method of transmitting a reference signal by higher power amplification than that of a control channel or a data channel.

On the other hand, it is desirable to constantly maintain the transmission power of each OFDM symbol in consideration of the efficiency of a transmitter side. When the power of a reference signal has been amplified, it is necessary to adjust the power of a control channel or a data channel and constantly maintain the power of an OFDM symbol.
A power boost for the reference signal is described in Non-Patent Document 2. When the power boost is performed in terms of the power boost for the reference signal, the use of the following methods is described in Non-Patent Document 2. That is, there are (1) a method of reducing power of other subcarrier components (the data channel) to be transmitted at the same time and (2) a method of setting the transmission power for other subcarrier components to the same transmission power as that of the data channel to be transmitted in an OFDM symbol in which no reference signal is transmitted and allocating null subcarriers in place thereof. The null subcarriers correspond to a punctured data symbol in Non-Patent Document 2.

However, it is necessary to average inter-cell interference for the above-described arrangement of null subcarriers. Otherwise, the inter-cell interference may be increased and there is a possibility that throughput characteristics of a control channel and a data channel may be degraded by data demodulation in a receiver.
It is necessary for the receiver side as a terminal to recognize the position of a symbol into which the transmitter side has inserted a null subcarrier, and it is necessary for the receiver to perform a demodulation process without the use of the symbol. To constantly maintain the transmission power, it is necessary to change the number of null subcarriers by a power boost value. Accordingly, the null subcarrier arrangement differs for each transmitter. It is necessary to report a null subcarrier position from the transmitter to the receiver so that the receiver side recognizes which subcarrier is a null subcarrier. Thus, there is a problem in that an information amount of control information to be transmitted from the transmitter to the receiver may be increased and throughput characteristics may be degraded.
Non-Patent Document 1: 3GPP TS 36.211 Technical Specification Group Radio Access Network; Physical Channels and Modulation V8.0.0
Non-Patent Document 2: 3GPP R1-071640 "Power Boosting of Reference Signal in E-UTRA Downlink"

### DISCLOSURE OF INVENTION

### Problem to be Solved by the Invention

The present invention has been made in view of the above-described circumstances, and an object of the invention is to provide a transmitter, a receiver, a transmission method, and a reception method capable of preventing the throughput between a transmitter and a receiver from being decreased.

### Means for Solving the Problem

(1) The present invention has been made to solve the above-described problem. According to an aspect of the present invention, there is provided a transmitter which communicates with a receiver, the transmitter including: a null subcarrier allocation unit which allocates a null subcarrier based on a priority and a signal, the priority being for allocating a null subcarrier to each subcarrier, the priority being a ranking predetermined with the receiver, the signal being allocated to each subcarrier; and a transmission unit which transmits the signal using the subcarrier allocated by the null subcarrier allocation unit as the null subcarrier to the receiver.
In the present invention, it is not necessary to report a subcarrier to which a null subcarrier is allocated from the transmitter to the receiver by specifying a subcarrier to which each null subcarrier is allocated in the transmitter and the receiver. Accordingly, it is possible to decrease the amount of information to be transmitted from the transmitter to the receiver and it is possible to prevent the throughput between the transmitter and the receiver from being decreased.

(2) According to the aspect of the present invention, when a signal is allocated to a subcarrier to which a null subcarrier is allocated, the null subcarrier allocation unit of the transmitter may not allocate the null subcarrier to the subcarrier and may allocate the null subcarrier to a subcarrier of the next priority.
In the present invention, a null subcarrier is not allocated to a subcarrier to which a signal is allocated, and the null subcarrier is allocated to a subcarrier of the next priority. Accordingly, even though a position of a subcarrier to which a signal is allocated is changed by shifting or hopping of a signal such as a control signal, it is possible for the receiver to specify a position of a subcarrier to which a null subcarrier is allocated without reporting the changed subcarrier position from the transmitter to the receiver.

(3) According to the aspect of the present invention, when a signal is allocated to a subcarrier to which a null subcarrier is allocated, the null subcarrier allocation unit of the transmitter may not allocate the null subcarrier to the subcarrier and may allocate the null subcarrier to a subcarrier adjacent to the subcarrier.
In the present invention, a null subcarrier is not allocated to a subcarrier to which a signal is allocated, and the null subcarrier is allocated to a subcarrier adjacent to the subcarrier. Accordingly, even though the position of a subcarrier to which a signal is allocated is changed by shifting or hopping of a signal such as a control signal, the receiver may specify the position of a subcarrier to which a null subcarrier is allocated without reporting the changed subcarrier position from the transmitter to the receiver.
Since a null symbol is allocated to the adjacent subcarrier, it is possible to make an arrangement similar to the arrangement of priorities of predetermined subcarriers.

(4) According to another aspect of the present invention, there is provided a transmitter which communicates with a receiver, the transmitter including: a priority determination unit which determines a priority based on a rule, the priority being for allocating a null subcarrier to each subcarrier, the rule being predetermined with the receiver; a null subcarrier allocation unit which allocates a null subcarrier based on the priority and a signal, the priority being determined by the priority determination unit, the signal being allocated to each subcarrier; and a transmission unit which transmits the signal using the subcarrier allocated by the null subcarrier allocation unit as the null subcarrier to the receiver.
In the present invention, it is not necessary to report a subcarrier to which a null subcarrier is allocated from the transmitter to the receiver by specifying a subcarrier to which each null subcarrier is allocated in the transmitter and the receiver. Accordingly, it is possible to decrease the amount of information to be transmitted from the transmitter to the receiver and it is possible to prevent the throughput between the transmitter and the receiver from being decreased.

(5) According to the other aspect of the present invention, the priority determination unit of the transmitter may determine the priority in order of subcarriers specified by 0, 2^{∧}(m-1), 2^{∧}(m-2), 2^{∧}(m-1)+2^{∧}(m-2), 2^{∧}(m-3), 2^{∧}(m-1)+2^{∧}(m-3), 2^{∧}(m-2)+2^{∧}(m-3), and 2^{∧}(m-1)+2^{∧}(m-2)+2^{∧}(m-3) when the number of subcarriers is 2^{∧}m.
In the present invention, it is possible to increase an interval between an i^{th} null subcarrier and an i+1^{th} null subcarrier.

(6) According to the other aspect of the present invention, the priority determination unit of the transmitter may determine the priority in order of subcarriers specified by mod(q^{∧}i, p)-1 when the number of subcarriers is a prime number p-1 and q is set to a primitive element of a definite field GF(p).
In the present invention, it is possible to randomize an interval between null subcarriers. It is possible to generate different null subcarrier patterns by changing the value of q.

(7) According to the other aspect of the present invention, the priority determination unit of the transmitter may determine the priority in order of subcarriers specified by a multi-stage interleaving technique expressed by [x0, [x1, [x2, ··· [xn-1, xn] ...] when the number of subcarriers is expressed by x0*x1*x2*···xn (only, x0≤x1≤x2≤···≤xn) at the time of factorizing the number of subcarriers into prime numbers.
In the present invention, an arrangement of null subcarriers is regularly made. Accordingly, it is possible to easily generate a subsequent sequence by storing a partial pattern even though the entire subcarrier sequence is not stored in the transmitter.

(8) According to the other aspect of the present invention, the null subcarrier allocation unit of the transmitter may allocate a null subcarrier according to the priority from predetermined subcarriers.
In the present invention, it is possible to generate a plurality of subcarrier patterns by changing a predetermined subcarrier position.

(9) According to the other aspect of the present invention, the priority determination unit of the transmitter may determine the priority by selecting one rule from among a plurality of rules predetermined with the receiver.
In the present invention, it is possible to reduce interference between transmitters by generating a different null subcarrier pattern for each transmitter.

(10) According to the other aspect of the present invention, the transmission unit of the transmitter may transmit identification information of a rule determined by the priority determination unit to the receiver.
In the present invention, even though a plurality of null subcarrier patterns is used, identification information for identifying a pattern thereof is reported to the receiver. Thereby, it is possible to reduce the amount of information for reporting a subcarrier pattern to the receiver.

(11) According to the other aspect of the present invention, the transmission unit of the transmitter may transmit the identification information to the receiver using a broadcast channel.
In the present invention, it is possible to report identification information of a subcarrier pattern simultaneously to all receivers by using the broadcast channel.

(12) According to a further aspect of the present invention, there is provided a receiver which communicates with a transmitter, the receiver including: a reception unit which receives a signal from the transmitter; and a null subcarrier specifying unit which specifies a subcarrier to which a null subcarrier is allocated based on a priority and a signal, the priority being for allocating a null subcarrier to each subcarrier, the priority being a ranking predetermined with the transmitter, the signal being allocated to each subcarrier among signals received by the reception unit.
In the present invention, it is not necessary to report a subcarrier to which a null subcarrier is allocated from the transmitter to the receiver by specifying a subcarrier to which each null subcarrier is allocated in the transmitter and the receiver. Accordingly, it is possible to decrease the amount of information to be transmitted from the transmitter to the receiver and it is possible to prevent the throughput between the transmitter and the receiver from being decreased.

(13) According to the further aspect of the present invention, the null subcarrier specifying unit of the receiver may specify a power boost value of a control signal transmitted from the transmitter and may specify the number of null subcarriers allocated to subcarriers based on the power boost value.
In the present invention, it is possible for the receiver to specify where a null subcarrier is allocated even though an arbitrary number of null symbols are allocated to subcarriers.

(14) According to the further aspect of the present invention, the null subcarrier specifying unit of the receiver may specify the power boost value of the control signal by demodulating an information bit set to a control signal.
In the present invention, it is possible to reliably determine a power boost value by using a control signal, and it is possible for the receiver to specify the number of null subcarriers to be inserted.

(15) According to the further aspect of the present invention, the null subcarrier specifying unit of the receiver may specify the power boost value from the ratio of a reception level of a control signal and a reception level of a data signal.
In the present invention, it is not necessary to report information for reporting the number of null subcarriers to be inserted from the transmitter to the receiver.

(16) According to the further aspect of the present invention, the null subcarrier specifying unit of the receiver may determine the priority by selecting one rule from among a plurality of rules predetermined with the transmitter.
In the present invention, it is possible to use a different null subcarrier allocation pattern by selecting a different rule for each of a plurality of sectors within a cell of the transmitter. Accordingly, it is possible to prevent the occurrence of inter-cell interference or inter-sector interference even though the same signal is transmitted from the transmitter to the receiver.

(17) According to the further aspect of the present invention, the reception unit of the receiver may receive identification information of a rule determined by the transmitter, and the null subcarrier specifying unit may determine the priority by selecting one rule from among a plurality of rules based on the identification information received by the reception unit.
In the present invention, it is possible to specify which pattern is used even though a plurality of null subcarrier allocation patterns exists. Also, identification information for identifying a null subcarrier pattern is used without reporting a position in which a null subcarrier is allocated from the transmitter to the receiver. Thereby, it is possible to decrease the amount of information of a signal to be transmitted from the transmitter to the receiver.

(18) According to a still further aspect of the present invention, there is provided a transmission method using a transmitter which communicates with a receiver, the transmission method including: allocating a null subcarrier based on a priority and a signal, the priority being for allocating a null subcarrier to each subcarrier, the priority being a ranking predetermined with the receiver, the signal being allocated to each subcarrier; and transmitting the signal using the subcarrier allocated by the null subcarrier allocation as the null subcarrier to the receiver.

(19) According to a still further aspect of the present invention, there is provided a transmission method using a transmitter which communicates with a receiver, the transmission method including: determining a priority based on a rule, the priority being for allocating a null subcarrier to each subcarrier, the rule being predetermined with the receiver; allocating a null subcarrier based on the priority and a signal, the priority being determined by the priority determination, the signal being allocated to each subcarrier; and transmitting the signal using the subcarrier allocated by the null subcarrier allocation as the null subcarrier to the receiver.

(20) According to a still further aspect of the present invention, there is provided a reception method using a receiver which communicates with a transmitter, the reception method including: receiving a signal from the transmitter; and specifying a subcarrier to which a null subcarrier is allocated based on a priority and a signal, the priority being for allocating a null subcarrier to each subcarrier, the priority being a ranking predetermined with the transmitter, the signal being allocated to each subcarrier among signals received by the reception.

### Effect of the Invention

In the transmitter and the receiver of the present invention, it is not necessary to report a subcarrier to which a null subcarrier is allocated from the transmitter to the receiver by specifying a subcarrier to which each null subcarrier is allocated in the transmitter and the receiver. Accordingly, it is possible to decrease the amount of information to be transmitted from the transmitter to the receiver and it is possible to prevent the throughput between the transmitter and the receiver from being decreased.

### BRIEF DESCRIPTION OF THE DRAWINGS

FIG. 1 is a schematic configuration diagram of a communication system 300 according to an embodiment of the present invention.
FIG. 2 is a schematic block diagram showing the configuration of a transmitter 10a and a receiver 20a according to the embodiment of the present invention.
FIG. 3 is a schematic block diagram showing the configuration of a transmission unit 103 of the transmitter 10a according to the embodiment of the present invention.
FIG. 4 is a schematic block diagram showing the configuration of a reception unit 204 of the receiver 20a according to the embodiment of the present invention.
FIG 5 is a flowchart showing a process of a first generation method of a null subcarrier pattern according to the embodiment of the present invention.
FIG. 6 is a diagram showing a specific example of the first generation method of the null subcarrier pattern according to the embodiment of the present invention.
FIG. 7 is a diagram showing a specific example of the first generation method of the null subcarrier pattern according to the embodiment of the present invention.
FIG. 8 is a flowchart showing a process of a second generation method of a null subcarrier pattern according to the embodiment of the present invention.
FIG. 9 is a diagram showing a specific example of the second generation method of the null subcarrier pattern according to the embodiment of the present invention.
FIG. 10 is a diagram showing a specific example of the second generation method of the null subcarrier pattern according to the embodiment of the present invention.
FIG. 11 is a flowchart showing a process of a third generation method of a null subcarrier pattern according to the embodiment of the present invention.
FIG 12 is a flowchart showing a process of a fourth generation method of a null subcarrier pattern according to the embodiment of the present invention.
FIG. 13 is a flowchart showing a process of a fifth generation method of a null subcarrier pattern according to the embodiment of the present invention.
FIG 14 is a diagram illustrating a first generation method of a basic pattern of null subcarriers according to the embodiment of the present invention.
FIG. 15 is a diagram showing a distribution of a basic null subcarrier pattern when the first generation method of the basic pattern of null subcarriers has been used according to the embodiment of the present invention.
FIG 16 is a diagram illustrating a second generation method of a basic pattern of null subcarriers according to the embodiment of the present invention.
FIG. 17 is a diagram showing a distribution of a basic null subcarrier pattern when the second generation method of the basic pattern of null subcarriers has been used according to the embodiment of the present invention.
FIG. 18 is a diagram illustrating a third generation method of a basic pattern of null subcarriers according to the embodiment of the present invention.
FIG. 19 is a diagram showing a distribution of a basic null subcarrier pattern when the third generation method of the basic pattern of null subcarriers has been used according to the embodiment of the present invention.
FIG. 20 is a sequence diagram showing a process of the communication system 300 of the present invention.

### Reference Symbols

- 10a:: TRANSMITTER
- 20a:: RECEIVER
- 101:: TRANSMISSION ANTENNA
- 102:: RECEPTION ANTENNA
- 103:: TRANSMISSION UNIT
- 104:: RECEPTION UNIT
- 105:: CONTROL UNIT
- 201:: TRANSMISSION ANTENNA
- 202:: RECEPTION ANTENNA
- 203:: TRANSMISSION UNIT
- 204:: RECEPTION UNIT
- 205:: CONTROL UNIT
- 300:: COMMUNICATION SYSTEM
- 1001:: MODULATION UNIT
- 1002:: RE ARRANGEMENT UNIT
- 1003:: RS GENERATION UNIT
- 1004:: CELL ID STORAGE UNIT
- 1005:: POWER ADJUSTMENT UNIT
- 1006:: POWER BOOST VALUE DETERMINATION UNIT
- 1007:: RS PATTERN GENERATION UNIT
- 1008:: NULL SUBCARRIER PATTERN GENERATION UNIT
- 1009:: NULL SUBCARRIER QUANTITY CALCULATION UNIT
- 1010:: BASIC PATTERN STORAGE UNIT
- 1011:: IFFT PROCESSING UNIT
- 1012:: RADIO UNIT
- 2001:: RADIO UNIT
- 2002:: FFT PROCESSING UNIT
- 2003:: SEPARATION UNIT
- 2004:: RS PATTERN GENERATION UNIT
- 2005:: NULL SUBCARRIER PATTERN GENERATION UNIT
- 2006:: BASIC PATTERN STORAGE UNIT
- 2007:: POWER BOOST VALUE DETECTION UNIT
- 2008:: CELL ID DETECTION UNIT
- 2009:: CHANNEL ESTIMATION UNIT
- 2010:: DEMODULATION UNIT
- 2011:: NULL SUBCARRIER QUANTITY CALCULATION UNIT

### BEST MODE FOR CARRYING OUT THE INVENTION

Hereinafter, embodiments of the present invention will be described with reference to the drawings.

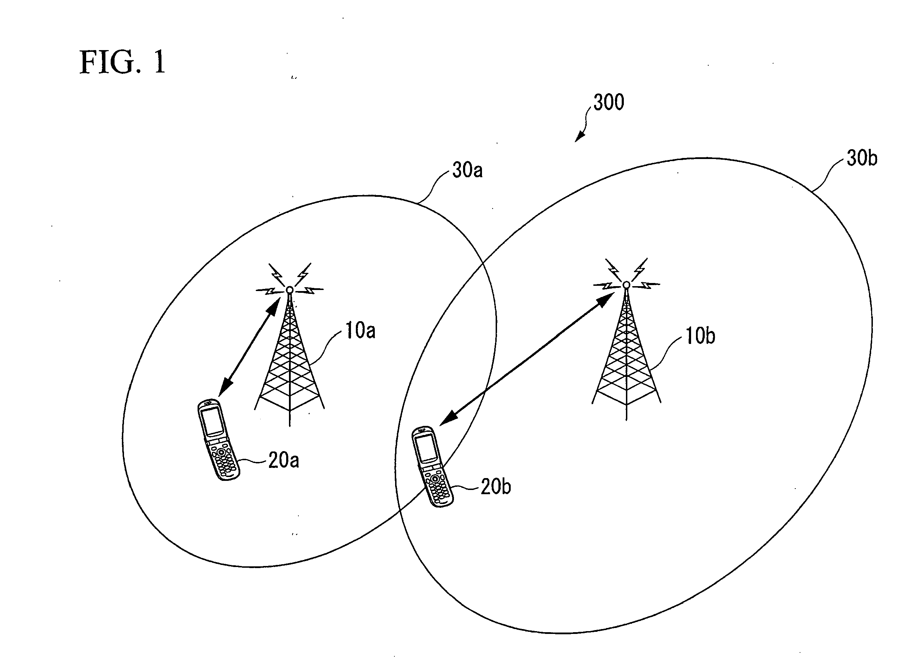

FIG. 1 is a schematic configuration diagram of a communication system 300 according to an embodiment of the present invention. The communication system 300 uses an OFDM technique. In FIG 1, a transmitter 10a as a base station communicates with a receiver 20a as a terminal such as a mobile phone. A transmitter 10b as a base station communicates with a receiver 20b as a terminal such as a mobile phone. Since the receiver 20a is located near the transmitter 10a, the receiver 20a is communicable with the transmitter 10a at a high transmission rate. An area 30a indicates a region where the transmitter 10a is communicable. An area 30b indicates a region where the transmitter 10b is communicable.

The transmitter 10b covers the wider communication area 30b than that of the transmitter 10a. The receiver 20b is located in a boundary of the area 30b. A boundary between the area 30a and the area 30b is also referred to as a cell boundary. To improve reception characteristics of the receiver located in the cell boundary, the transmitter 10b performs transmission to the receiver 20b by amplifying the (power-boosting) transmission power of a reference signal.
The transmitter 10b transmits an OFDM signal to the receiver 20b by performing a power boost of a reference signal and constantly maintaining transmission power by the null subcarrier arrangement. Also, the reference signal arrangement and the null subcarrier arrangement of the transmitter 10a are respectively different from those of the transmitter 10b.

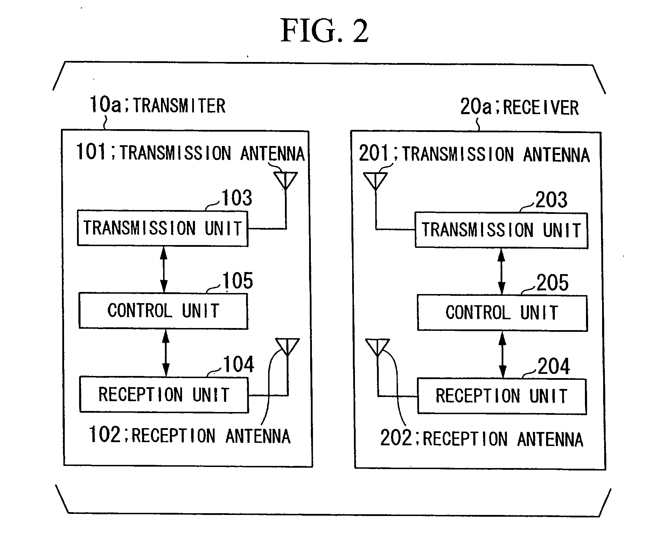

FIG. 2 is a schematic block diagram showing the configuration of the transmitter 10a and the receiver 20a according to the embodiment of the present invention. The transmitter 10b of FIG. 1 has the same configuration as the transmitter 10a of FIG. 2. Also, the receiver 20b of FIG 1 has the same configuration as the receiver 20a of FIG. 2. Description of the transmitter 10b and the receiver 20b is omitted. The transmitter 10a performs a reception process as well as a transmission process. The receiver 20a performs a transmission process as well as a reception process.

The transmitter l0a has a transmission antenna 101, a reception antenna 102, a transmission unit 103, a reception unit 104, and a control unit 105.
The transmission antenna 101 transmits a signal output from the transmission unit 103 to the receiver 20a as an OFDM signal of a radio frequency band.
The reception antenna 102 receives an OFDM signal of a radio frequency band from the receiver 20a, and outputs the OFDM signal to the reception unit 104. The transmission unit 103 performs a transmission process such as modulation or up-conversion for a signal output from the control unit 105, and outputs the signal to the transmission antenna 101.
The reception unit 104 performs a reception process such as demodulation or down-conversion for a signal output from the reception antenna 102, and outputs the signal to the control unit 105.
The control unit 105 outputs a transmission signal to the transmission unit 103, or acquires a received signal from the reception unit 104. The control unit 105 controls each element of the transmitter 10a.

The receiver 20a has a transmission antenna 201, a reception antenna 202, a transmission unit 203, a reception unit 204, and a control unit 205.
The transmission antenna 201 transmits a signal to be output from the transmission unit 203 to the transmitter 10a as an OFDM signal of a radio frequency band.
The reception antenna 202 receives an OFDM signal of a radio frequency band from the transmitter 10a, and output the OFDM signal to the reception unit 204.
The transmission unit 203 performs a transmission process such as modulation or up-conversion for a signal output from the control unit 205, and outputs the signal to the transmission antenna 201.
The reception unit 204 performs a reception process such as demodulation or down-conversion for a signal output from the reception antenna 202, and outputs the signal to the control unit 205.
The control unit 205 outputs a transmission signal to the transmission unit 203, or acquires a received signal from the reception unit 204. The control unit 205 controls each element of the receiver 20a.

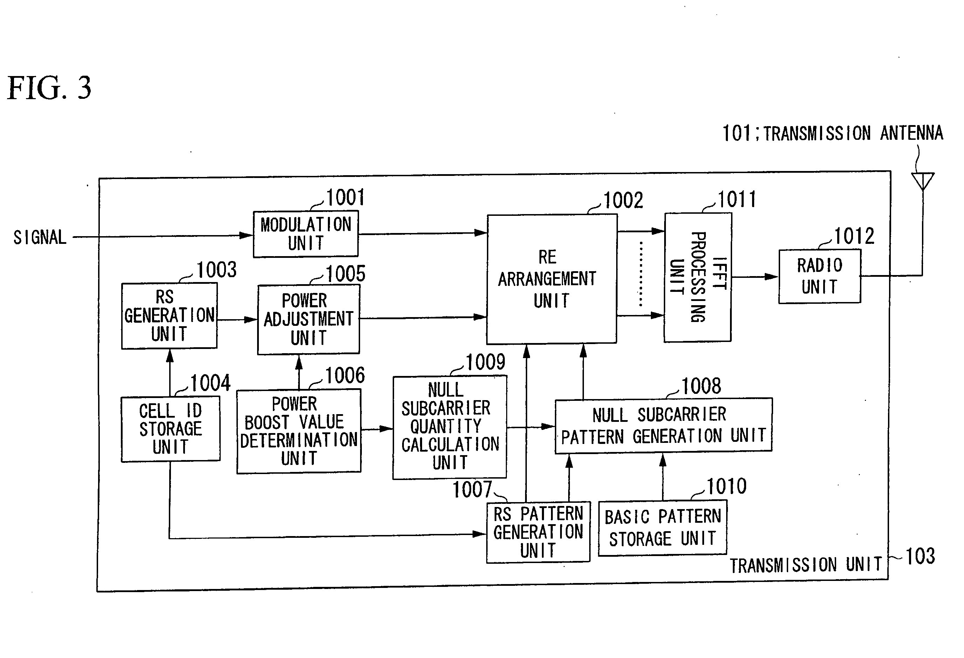

FIG. 3 is a schematic block diagram showing the configuration of the transmission unit 103 (FIG. 2) of the transmitter 10a according to the embodiment of the present invention. The transmission unit 103 has a modulation unit 1001, an RE (Resource Element) arrangement unit 1002 (also referred to as a null subcarrier allocation unit), an RS generation unit 1003, a cell ID storage unit 1004, a power adjustment unit 1005, a power boost value determination unit 1006, an RS pattern generation unit 1007, a null subcarrier pattern generation unit 1008 (also referred to as a priority determination unit), a null subcarrier quantity calculation unit 1009, a basic pattern storage unit 1010, an IFFT (Inverse Fast Fourier Transform) processing unit 1011, and a radio unit 1012 (also referred to as a transmission unit).

First, a signal of user data corresponding to user information, control data corresponding to a control signal, or the like is input to the modulation unit 1001, which performs modulation corresponding to each data. For example, when a communication environment is good, the user data is modulated by 64QAM (64 Quadrature Amplitude Modulation) and the control data is modulated by QPSK (Quadrature Phase Shift Keying). A data symbol modulated by the modulation unit 1001 is input to the RE arrangement unit 1002.

The RS generation unit 1003 generates a reference signal (RS) based on a cell ID stored in the cell ID storage unit 1004, and inputs the generated reference signal to the power adjustment unit 1005. The reference signal is a control signal corresponding to a known symbol or a pilot symbol. In the power adjustment unit 1005, power of the reference signal (RS) is adjusted to a value determined by the power boost value determination unit 1006. The reference signal (RS) of which the power has been adjusted by the power adjustment unit 1005 is input to the RE arrangement unit 1002.

The RE arrangement unit 1002 arranges a reference symbol input from the modulation unit 1001 to a resource element (RE) according to a pattern generated by the RS pattern generation unit 1007. The RE arrangement unit 1002 arranges modulated data input from the modulation unit 1001 to a resource element (RE) according to a pattern generated by the null subcarrier pattern generation unit 1008.
The RS pattern generation unit 1007 generates an RS pattern based on a cell ID stored in the cell ID storage unit 1004. The null subcarrier pattern generation unit 1008 generates a null subcarrier pattern for each cell based on the number of null subcarriers calculated by the null subcarrier quantity calculation unit 1009, an RS pattern generated by the RS pattern generation unit 1007, and the basic pattern stored in the basic pattern storage unit 1010.

The number of null subcarriers calculated by the null subcarrier quantity calculation unit 1009 is calculated based on a value detected by the power boost value determination unit 1006. For example, as the power boost value increases, the number of null subcarriers is also large. On the other hand, as the power boost value decreases, the number of null subcarriers is also small.
Each symbol in which a null subcarrier, a signal, or the like is arranged by the RE arrangement unit 1002 is converted from a frequency domain signal to a time domain signal by the IFFT processing unit 1011. Thereafter, the signal is converted into a radio frequency band by the radio unit 1012, and is transmitted from the transmission antenna 101 to the receiver 20a.

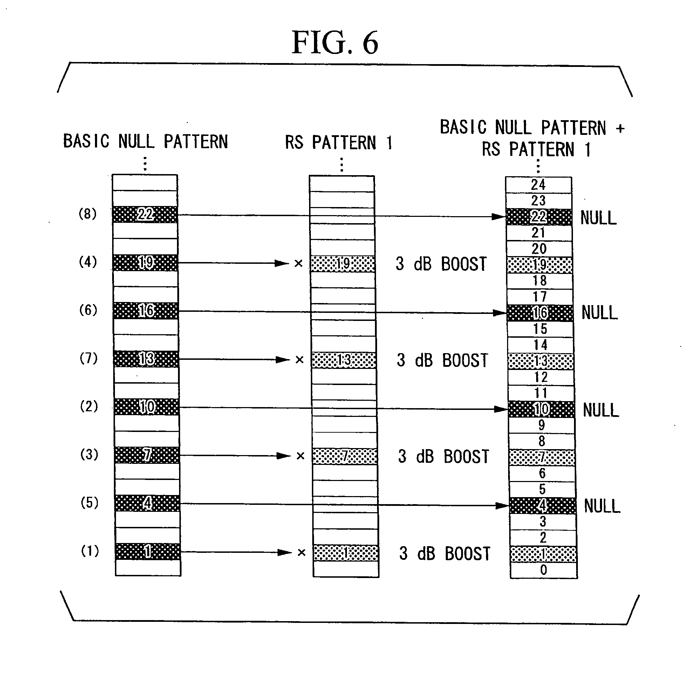

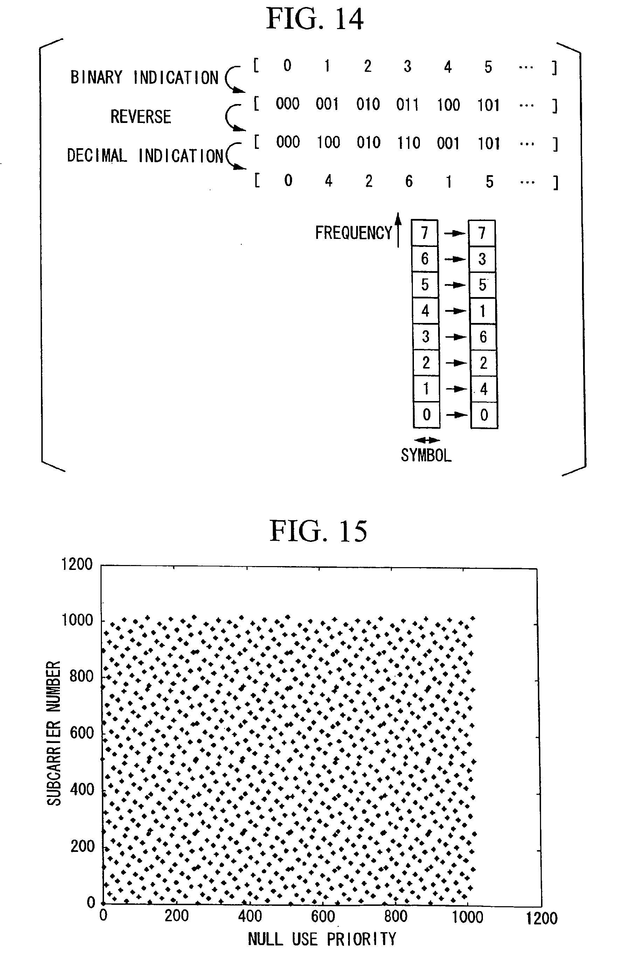

The null subcarrier pattern generation unit 1008 determines a priority in which a null subcarrier is allocated to each subcarrier based on a rule predetermined with the receiver 20a. The rule predetermined with the receiver 20a will be described by FIGS. 14, 16, and 18. A priority in which a null subcarrier is allocated to each subcarrier corresponds to a basic null pattern in FIGS. 6, 7, 9, and 10.
The RE arrangement unit 1002 allocates a null subcarrier to a resource element (RE) based on the priority determined by the null subcarrier pattern generation unit 1008 and the signal allocated to each subcarrier.
The radio unit 1012 transmits a subcarrier allocated by the RE arrangement unit 1002 to the receiver 20a as a null subcarrier.

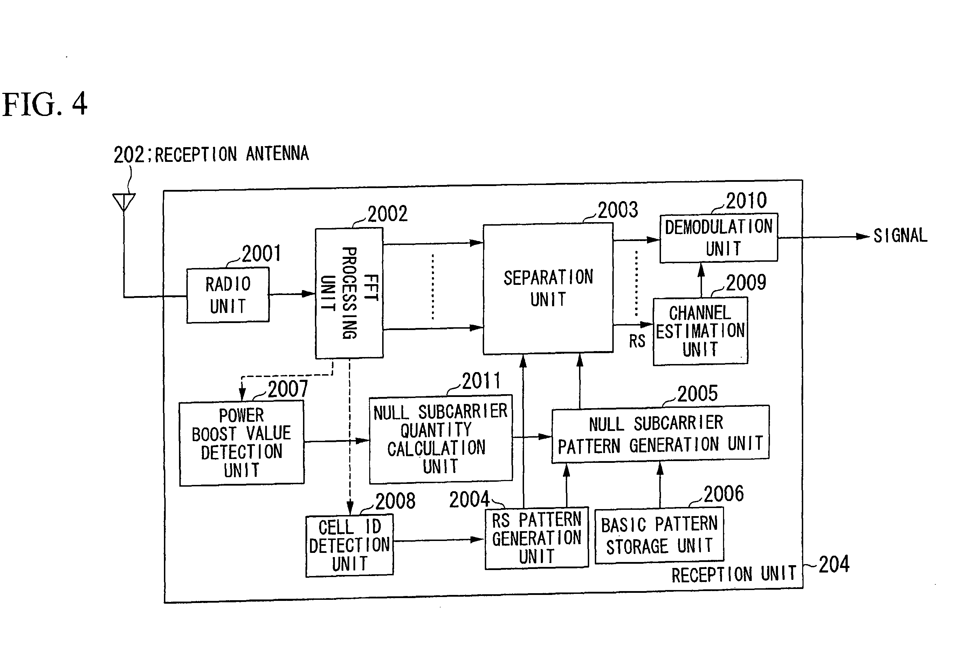

FIG. 4 is a schematic block diagram showing the configuration of the reception unit 204 (FIG. 2) of the receiver 20a according to the embodiment of the present invention. The reception unit 204 includes a radio unit 2001 (also referred to as a reception unit), an FFT (Fast Fourier Transform) processing unit 2002, a separation unit 2003 (also referred to as a null subcarrier specifying unit), an RS pattern generation unit 2004, a null subcarrier pattern generation unit 2005, a basic pattern storage unit 2006, a power boost value detection unit 2007, a cell ID detection unit 2008, a channel estimation unit 2009, a demodulation unit 2010, and a null subcarrier quantity calculation unit 2011.

First, the reception antenna 202 receives a signal of a radio frequency band from the transmitter 10a.
Next, the signal received by the reception antenna 202 is down-converted by the radio unit 2001, and is converted into a baseband signal.
Thereafter, the conversion from a time domain signal into a frequency domain signal is performed by the FFT processing unit 2002, and the signal is input to the separation unit 2003. In the separation unit 2003, a reference signal (RS) is extracted according to an RS pattern generated by the RS pattern generation unit 2004. In the separation unit 2003, a received data symbol is extracted according to the null subcarrier pattern generated by the null subcarrier pattern generation unit 2005. The processes of the RS pattern generation unit 2004, the null subcarrier pattern generation unit 2005, and the null subcarrier quantity calculation unit 2011 are respectively the same as those of the RS pattern generation unit 1007, the null subcarrier pattern generation unit 1008, and the null subcarrier quantity calculation unit 1009 of FIG. 3.

The same pattern as the basic pattern of the transmitter 10a of FIG. 3 is stored as a basic pattern stored in the basic pattern storage unit 2006. Thus, it is possible to generate the same null subcarrier pattern by the receiver 20a even though a null subcarrier pattern of each cell generated by the transmitter 10a is not reported to the receiver 20a.

The power boost value detection unit 2007 may obtain a power boost value by detecting a value reported by the transmitter 10a in a control signal or the like. When a power boost value is not reported from the transmitter 10a, it is possible to specify a power boost value by detecting a level ratio between a reference symbol and a signal such as data without a notification from the transmitter.
When the power boost value is not reported from the transmitter 10a and the number of null subcarriers is reported, it is desirable to directly input a reported value to the null subcarrier pattern generation unit 2005. The cell ID detection unit 2008 may detect a cell ID by demodulating a synchronization signal or the like.

A reference symbol extracted by the separation unit 2003 is input to the channel estimation unit 2009. The channel estimation unit 2009 estimates a propagation channel by a reference symbol (RS) input from the separation unit 2003.
Thereafter, the demodulation unit 2010 demodulates a received data symbol input from the separation unit 2003 to the demodulation unit 2010 using propagation channel characteristics estimated by the channel estimation unit 2009. When data symbols whose number corresponds to the number of null subcarriers arranged by the transmission unit 103 of the transmitter 10a are sorted and transmitted, the data symbols are demodulated by setting the null subcarriers to 0. By the above-described process, the receiver 20a may obtain desired data such as user data corresponding to user information, control data corresponding to a control signal, or the like.

As descried above, the radio unit 2001 of the receiver 20a of this embodiment receives a signal from the transmitter 10a.
The separation unit 2003 specifies a subcarrier to which a null subcarrier is allocated based on a priority in which a null subcarrier is allocated to each subcarrier and a signal allocated to each subcarrier among signals received by the radio unit 2001 in a sequence predetermined with the transmitter 10a.

The case where the transmitter 10a or the receiver 20a has one transmission antenna and one reception antenna has been described above, but it is not limited thereto. For example, the transmission antenna and the reception antenna may be constituted by one antenna, and the transmission antenna and the reception antenna may be constituted by two or more antennas.

Next, first to fifth generation methods of a null subcarrier pattern will be described. Processes of the first to fifth generation methods of the null subcarrier pattern is performed in the null subcarrier pattern generation unit 1008 of the transmission unit 103 of the transmitter 10a or the null subcarrier pattern generation unit 2005 of the reception unit 203 of the receiver 20a.
The null subcarrier pattern generation unit 1008 of the transmission unit 103 of the transmitter 10a and the null subcarrier pattern generation unit 2005 of the reception unit 203 of the receiver 20a generate a null subcarrier pattern using the same null subcarrier pattern generation method determined in advance.
The case where the processes of the first to fifth generation methods of the null subcarrier pattern are performed in the null subcarrier pattern generation unit 1008 of the transmission unit 103 of the transmitter 10a will be described below. On the other hand, since the case where the processes of the first to fifth generation methods of the null subcarrier pattern are performed in the null subcarrier pattern generation unit 2005 of the reception unit 203 of the receiver 20a is the same as that in the null subcarrier pattern generation unit 1008, description thereof is omitted.

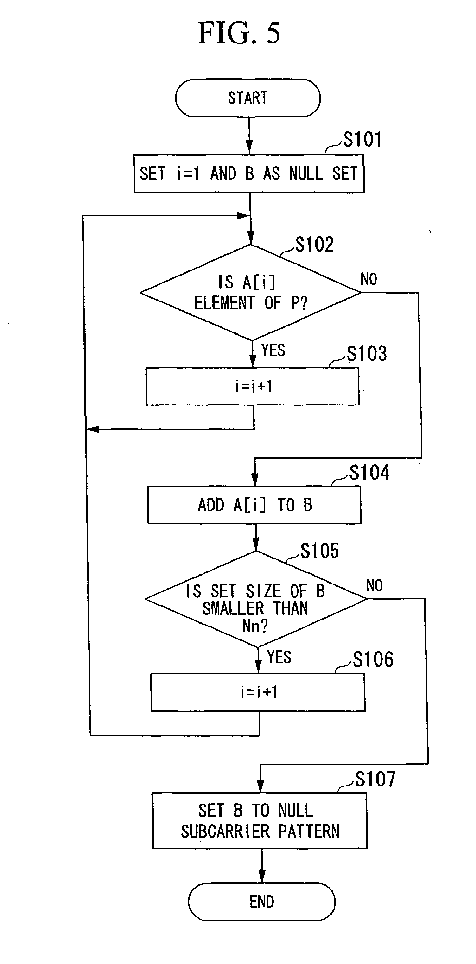

FIG 5 is a flowchart showing the first generation method of a null subcarrier pattern according to the embodiment of the present invention.
First, the null subcarrier pattern generation unit 1008 defines a basic pattern A of null subcarriers. A reference signal pattern is denoted by P. As a method of generating the basic pattern A of null subcarriers, it is possible to use the first to third generation methods (FIGS. 14, 16, and 18) of the basic pattern of null subcarriers to be described later or the like.

The null subcarrier pattern generation unit 1008 determines a null subcarrier pattern B as described below when the number of null subcarriers is denoted by Nn. A is a numerical sequence, and P and B are sets. An i^{th} element of A is denoted by A[i]. Here, the number of null subcarriers, Nn, is a value defined by the power boost value. As the power boost value increases, the number of null subcarriers, Nn, is also large. On the other hand, as the power boost value decreases, the number of null subcarriers, Nn, is also small.

First, the null subcarrier pattern generation unit 1008 sets i=1 and sets B as a null set (step S101).
Then, the null subcarrier pattern generation unit 1008 determines whether or not A[i] is an element of P (step S 102). When A[i] is an element of P, the null subcarrier pattern generation unit 1008 determines "YES" in step S102, sets i=i+1 (step S103), and proceeds to step S102.
On the other hand, when A[i] is not an element of P, the null subcarrier pattern generation unit 1008 determines "NO" in step S102, and adds A[i] to B (step S104).

Then, the null subcarrier pattern generation unit 1008 determines whether or not a set size of B is smaller than Nn (step S 105). When the set size of B is smaller than Nn, the null subcarrier pattern generation unit 1008 determines "YES" in step S105, and proceeds to step S106. The null subcarrier pattern generation unit 1008 sets i=i+1 (step S 106). That is, 1 is added to i. Then, it proceeds to step S 102.
On the other hand, when the set size of B is equal to or greater than Nn, the null subcarrier pattern generation unit 1008 determines "NO" in step S105, and sets B as a null subcarrier pattern (step S107). Then, the null subcarrier pattern generation unit 1008 ends the process of the flowchart of FIG. 5.

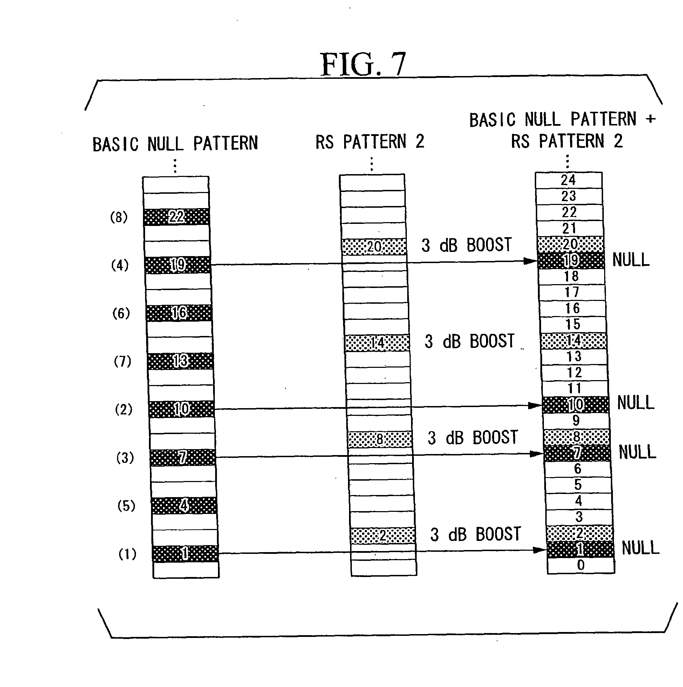

FIGS. 6 and 7 are diagrams showing specific examples of the first generation method of the null subcarrier pattern according to the embodiment of the present invention.
FIG. 6 shows the case where A[i]={1, 10, 7, 19, 4, 16, 13, 22,···} (i=1, 2, ···), P={1, 7, 13, 19,···} (an RS pattern of a cell 1), and Nn=4 in the first generation method of the null subcarrier pattern of FIG. 5.

That is, priority is allocated in order of (1) a 1^{st} subcarrier, (2) a 10^{th} subcarrier, (3) a 7^{th} subcarrier, (4) a 19^{th} subcarrier, (5) a 4^{th} subcarrier, (6) a 16^{th} subcarrier, (7) a 13^{th} subcarrier, (8) a 22^{nd} subcarrier, ··· as the basic null pattern (see the leftmost figure of FIG. 6).
As an RS pattern 1, signals are allocated to the 1^{st} subcarrier, the 7^{th} subcarrier, the 13^{th} subcarrier, and the 19^{th} subcarrier (see the middle figure of FIG. 6).
The null subcarrier pattern generation unit 1008 determines a subcarrier to which a null subcarrier is allocated based on the basic null pattern and the RS pattern 1 (see the rightmost figure of FIG. 6). That is, since the signals are allocated to the 1^{st} subcarrier, the 7^{th} subcarrier, the 13^{th} subcarrier, and the 19^{th} subcarrier, a null subcarrier is not allocated thereto and is allocated to a subcarrier of the next priority.

FIG. 7 shows the case where A[i]={1, 10, 7, 19, 4, 16, 13, 22,···} (i=1, 2, ···), P={2, 8, 14, 20,···} (an RS pattern of a cell 2), and Nn=4 in the first generation method of the null subcarrier pattern of FIG. 5.

That is, priority is allocated in order of (1) a 1^{st} subcarrier, (2) a 10^{th} subcarrier, (3) a 7^{th} subcarrier, (4) a 19^{th} subcarrier, (5) a 4^{th} subcarrier, (6) a 16^{th} subcarrier, (7) a 13^{th} subcarrier, (8) a 22^{nd} subcarrier, ··· as the basic null pattern (see the leftmost figure of FIG. 7).
As an RS pattern 2, signals are allocated to a 2^{nd} subcarrier, an 8^{th} subcarrier, a 14^{th} subcarrier, and a 20^{th} subcarrier (see the middle figure of FIG. 7).
The null subcarrier pattern generation unit 1008 determines a subcarrier to which a null subcarrier is allocated based on the basic null pattern and the RS pattern 2 (see the rightmost figure of FIG. 7). That is, since signals are not allocated to the 1^{st} subcarrier, the 7^{th} subcarrier, the 10^{th} subcarrier, and the 19^{th} subcarrier, null subcarriers are allocated thereto.

It is possible to generate a null subcarrier pattern of each cell only by one basic pattern using the first generation method of the null subcarrier pattern described above. As seen from FIGS. 6 and 7, different null subcarrier patterns are provided in the cell 1 and the cell 2 even though the basic pattern is identical. Thereby, it is possible to average inter-cell interference and it is possible to improve the throughput of the entire system.

It is possible to generate a different null subcarrier pattern for each cell by one basic pattern. Thereby, it is desirable that the transmitter 10a as the base station and the receiver 20a as the mobile communication terminal should have one predetermined basic pattern. Accordingly, it is not necessary to report a null subcarrier position from the transmitter 10a to the receiver 20a, and it is possible to simplify a reception process in the receiver 20a. When a plurality of basic patterns is provided, it is desirable to report the amount of information of several bits from the transmitter 10a to the receiver 20a.
It is possible to uniformly arrange null subcarriers for a system band even in any power boost value by generating a basic pattern as in the basic pattern generation methods 1 to 3 (FIGS. 14, 16, and 18).

When the null subcarriers are not uniformly arranged, a large resource block and a small resource block in the number of subcarriers to which data is capable of being allocated may be generated. That is, in a resource block in which a large number of null subcarrier are arranged, there is a possibility that the number of available subcarriers may be small and the quality of communication may be significantly degraded.
Interference to other cells may be reduced in a resource block having a large number of null subcarriers, but interference may be relatively increased in a resource block having a small number of null subcarriers. It is possible to remove a difference between the resource blocks by uniformly arranging the null subcarriers as described above.

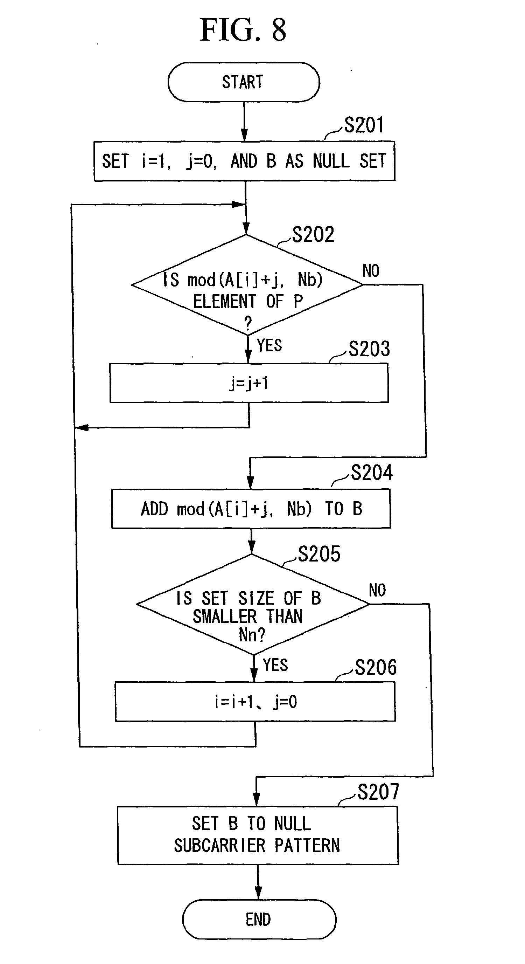

FIG 8 is a flowchart showing a process of a second generation method of the null subcarrier pattern according to the embodiment of the present invention.
First, the null subcarrier pattern generation unit 1008 defines a basic pattern A of null subcarriers. A basic pattern generation method is separately shown. A reference signal pattern is denoted by P. Then, the null subcarrier pattern generation unit 1008 determines a null subcarrier pattern B as described below when the number of null subcarriers is denoted by Nn. A is a numerical sequence, and P and B are sets. An i^{th} element of A is denoted by A[i]. The number of subcarriers of a cell is set as N_{b}.

First, the null subcarrier pattern generation unit 1008 sets i=1 and j=0 and sets B as a null set (step S201).
Then, the null subcarrier pattern generation unit 1008 determines whether or not mod(A[i]+j, N_{b}) is an element of P (step S202). That is, it is determined whether or not a remainder obtained by dividing A[i]+j by N_{b} is an element of P.
When mod(A[i]+j, N_{b}) is an element of P, the null subcarrier pattern generation unit 1008 determines "YES" in step S202, sets j=j+1 (step S203), and proceeds to step S202.
On the other hand, when mod(A[i]+j, N_{b}) is not an element of P, the null subcarrier pattern generation unit 1008 determines "NO" in step S202, and adds mod(A[i]+j, N_{b}) to B (step S204).

Then, the null subcarrier pattern generation unit 1008 determines whether or not the set size of B is smaller than Nn (step S205). When the set size of B is smaller than Nn, the null subcarrier pattern generation unit 1008 determines "YES" in step S205, sets i=i+1 and j=0 (step S206), and proceeds to step S202.
On the other hand, when the set size of B is equal to or greater than Nn, the null subcarrier pattern generation unit 1008 determines "NO" in step S205, and sets B as the null subcarrier pattern (step S207). Then, the process of the flowchart of FIG. 8 is ended.

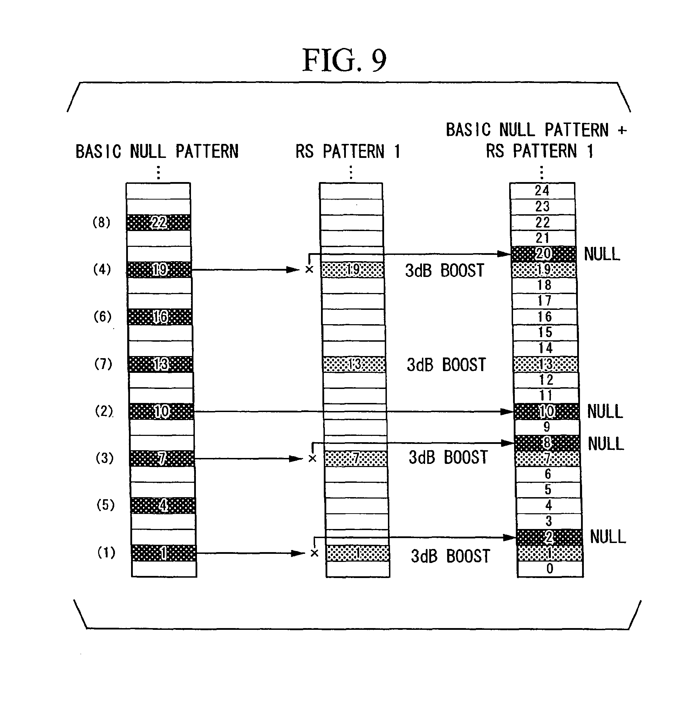

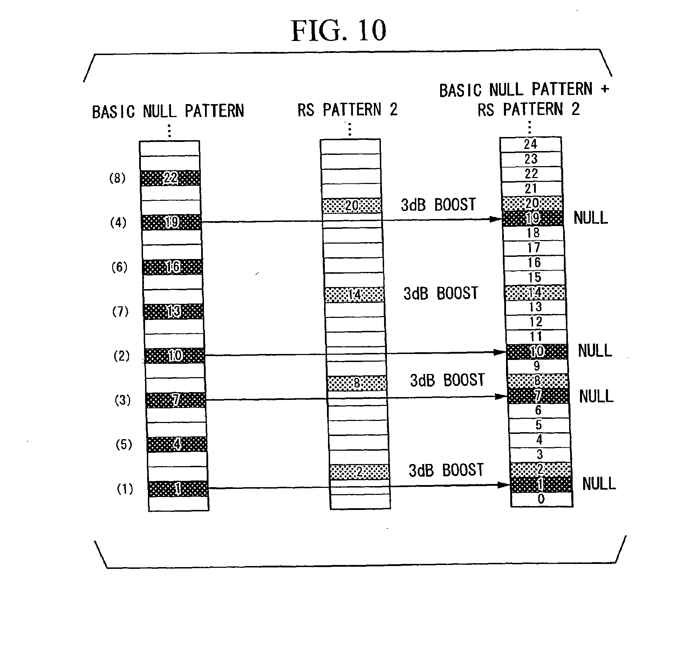

FIGS. 9 and 10 are diagrams showing specific examples of the second generation method of the null subcarrier pattern according to the embodiment of the present invention.
FIG. 9 shows the case where A[i]={1, 10, 7, 19, 4, 16, 13, 22,···} (i=1, 2, ···), P={1, 7, 13, 19,···} (an RS pattern of a cell 1), and Nn=4 in the second generation method of the null subcarrier pattern of FIG. 8.

That is, priority is allocated in order of (1) a 1^{st} subcarrier, (2) a 10^{th} subcarrier, (3) a 7^{th} subcarrier, (4) a 19^{th} subcarrier, (5) a 4^{th} subcarrier, (6) a 16^{th} subcarrier, (7) a 13^{th} subcarrier, (8) a 22^{nd} subcarrier, ··· as the basic null pattern (see the leftmost figure of FIG. 9).
As an RS pattern 1, signals are allocated to the 1^{st} subcarrier, the 7^{th} subcarrier, the 13^{th} subcarrier, and the 19^{th} subcarrier (see the middle figure of FIG. 9).
The null subcarrier pattern generation unit 1008 determines a subcarrier to which a null subcarrier is allocated based on the basic null pattern and the RS pattern 1 (see the rightmost figure of FIG. 9). That is, since the signals are allocated to the 1^{st} subcarrier, the 7^{th} subcarrier, and the 19 subcarrier, null subcarriers are not allocated thereto and are allocated to a 2^{nd} subcarrier, an 8^{th} subcarrier, and a 20^{th} subcarrier adjacent to the subcarriers.

FIG 10 shows the case where A[i]={1, 10, 7, 19, 4, 16, 13, 22,···} (i=1, 2, ···), P={2, 8, 14, 20, ···} (an RS pattern of a cell 2), and Nn=4 in the second generation method of the null subcarrier pattern of FIG 8.

That is, priority is allocated in order of (1) a 1^{st} subcarrier, (2) a 10^{th} subcarrier, (3) a 7^{th} subcarrier, (4) a 19^{th} subcarrier, (5) a 4^{th} subcarrier, (6) a 16^{th} subcarrier, (7) a 13^{th} subcarrier, (8) a 22^{nd} subcarrier, ··· as the basic null pattern (see the leftmost figure of FIG 10).
As an RS pattern 2, signals are allocated to a 2^{nd} subcarrier, an 8^{th} subcarrier, a 14^{th} subcarrier, and a 20^{th} subcarrier (see the middle figure of FIG. 10).
The null subcarrier pattern generation unit 1008 determines a subcarrier to which a null subcarrier is allocated based on the basic null pattern and the RS pattern 2 (see the rightmost figure of FIG. 10). That is, since signals are not allocated to the 1^{st} subcarrier, the 7^{th} subcarrier, the 10^{th} subcarrier, and the 19^{th} subcarrier, null subcarriers are allocated thereto.

The above is the second generation method of the null subcarrier pattern. Differences between the first generation method and the second generation method of the null subcarrier pattern are as follows. That is, the first generation method of the null subcarrier pattern moves to subcarriers of the next priority when a collision with the reference signal (RS) has occurred. On the other hand, the second generation method of the null subcarrier pattern moves to adjacent subcarriers when a collision with the reference signal (RS) has occurred.
When the second generation method of the null subcarrier pattern is used, it is possible to achieve the same advantageous effect as that of the first generation method of the null subcarrier pattern. Since the movement to the adjacent subcarriers, not the next priority, is made when the collision with the reference signal (RS) has occurred, it is possible to set the basic pattern sequence length to be shorter than that of the first generation method of the null subcarrier pattern.

In the first and second generation methods of the null subcarrier pattern, it is assumed that the number of subcarriers of the basic pattern A and the number of subcarriers of a cell to be operated are identical. However, in LTE, a plurality of bandwidths between 1.25 MHz and 20 MHz is operated as a system band bandwidth. It is inefficient to prepare one corresponding to each bandwidth as a basic pattern, and it is desirable to perform an operation by a common basic pattern. That is, when the basic pattern corresponding to the number of subcarriers of a system of 20 MHz as the maximum bandwidth is provided, it is desirable to generate a null subcarrier pattern by also applying the basic pattern to a system of a narrower bandwidth.
When the number of subcarriers of a basic pattern of null subcarriers and the number of subcarriers of a cell are different, a method of generating a null subcarrier pattern will be described as third and fourth generation methods of the null subcarrier pattern.

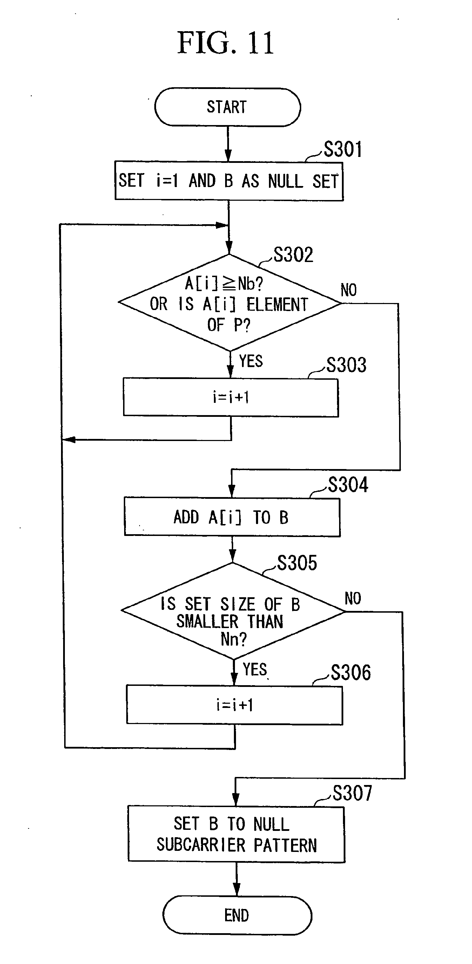

FIG. 11 is a flowchart showing a process of the third generation method of the null subcarrier pattern according to the embodiment of the present invention.
In the third generation method of the null subcarrier pattern, the number of subcarriers of a basic pattern of null subcarriers is set as No, and the number of subcarriers of a cell is set as N_{b}. The other conditions are the same as those of the first generation method (FIG. 5) of the null subcarrier pattern.

First, the null subcarrier pattern generation unit 1008 sets i=1 and sets B as a null set (step S301).
Then, the null subcarrier pattern generation unit 1008 determines whether or not A[i]≥N_{b} or A[i] is an element of P (step S302). When A[i]≥ N_{b} or A[i] is an element of P, the null subcarrier pattern generation unit 1008 determines "YES" in step S302, sets i=i+1 (step S303), and proceeds to step S302.
On the other hand, when A[i]≥ N_{b} is not satisfied or A[i] is not an element of P, the null subcarrier pattern generation unit 1008 determines "NO" in step S302, adds A[i] to B (step S304), and proceeds to step S305.

Then, the null subcarrier pattern generation unit 1008 determines whether or not the set size of B is smaller than Nn (step S305). When the set size of B is smaller than Nn, the null subcarrier pattern generation unit 1008 determines "YES" in step S305, sets i=i+1 (step S306), and proceeds to step S302.
On the other hand, when the set size of B is equal to or greater than Nn, the null subcarrier pattern generation unit 1008 determines "NO" in step S305, and sets B as the null subcarrier pattern (step S307). Then, the process of the flowchart of FIG. 11 is ended.

When the above-described third generation method of the null subcarrier pattern is used, it is possible to generate the null subcarrier pattern even though the number of subcarriers of a basic pattern of null subcarriers and the number of subcarriers of a cell are different. When the third generation method of the null subcarrier pattern is used, it is possible to achieve the same advantageous effect as that of the first generation method of the null subcarrier pattern.

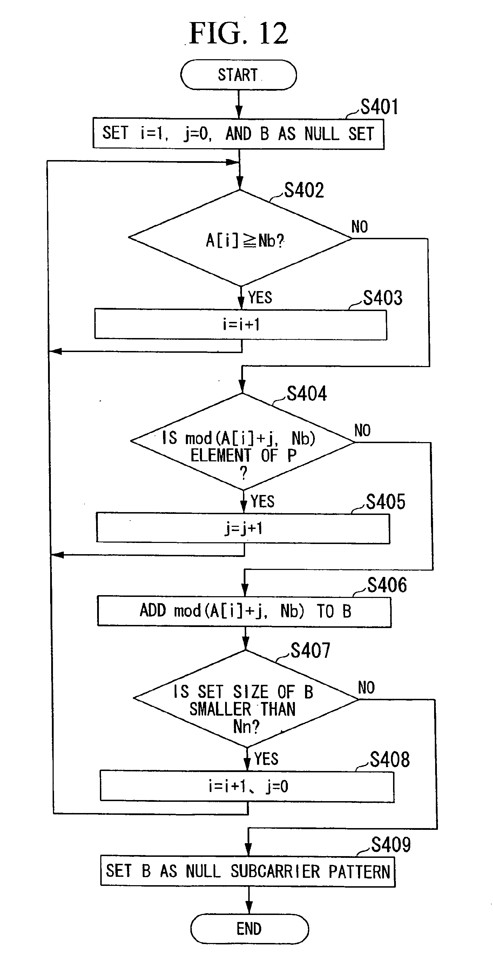

FIG. 12 is a flowchart showing a process of the fourth generation method of the null subcarrier pattern according to the embodiment of the present invention.
In the fourth generation method of the null subcarrier pattern, the number of subcarriers of a basic pattern of null subcarriers is set as No, and the number of subcarriers of a cell is set as N_{b}. The other conditions are the same as those of the second generation method (FIG. 8) of the null subcarrier pattern.

First, the null subcarrier pattern generation unit 1008 sets i=1 and j=0 and sets B as a null set (step S401).
Then, the null subcarrier pattern generation unit 1008 determines whether or not A[i]≥ N_{b} (step S402). When A[i]≥ N_{b}, the null subcarrier pattern generation unit 1008 determines "YES" in step S402, sets i=i+1 (step S403), and proceeds to step S402.

On the other hand, when A[i]≥ N_{b} is not satisfied, the null subcarrier pattern generation unit 1008 determines "NO" in step S402, and determines whether or not mod(A[i]+j, N_{b}) is an element of P (step S404). When mod(A[i]+j, N_{b}) is an element of P, the null subcarrier pattern generation unit 1008 determines "YES" in step S404, sets j=j+1 (step S405), and proceeds to step S402.
On the other hand, when mod(A[i]+j, N_{b}) is not an element of P, the null subcarrier pattern generation unit 1008 determines "NO" in step S404, adds mod(A[i]+j, N_{b}) to B (step S406), and proceeds to step S407.

Then, the null subcarrier pattern generation unit 1008 determines whether or not the set size of B is smaller than Nn (step S407). When the set size of B is smaller than Nn, the null subcarrier pattern generation unit 1008 determines "YES" in step S407, sets i=i+1 and j=0 (step S408), and proceeds to step S402.
On the other hand, when the set size of B is equal to or greater than Nn, the null subcarrier pattern generation unit 1008 determines "NO" in step S407, and sets B as the null subcarrier pattern (step S409). Then, the process of the flowchart of FIG. 12 is ended.

When the above-described fourth generation method of the null subcarrier pattern is used, it is possible to generate the null subcarrier pattern even though the number of subcarriers of a basic pattern of null subcarriers and the number of subcarriers of a cell are different. When the fourth generation method of the null subcarrier pattern is used, it is possible to achieve the same advantageous effect as that of the second generation method of the null subcarrier pattern.

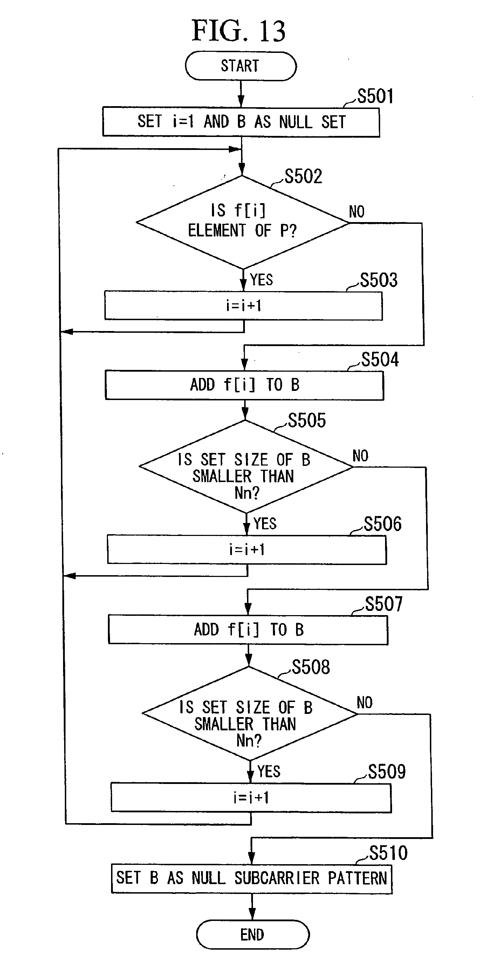

FIG. 13 is a flowchart showing a process of a fifth generation method of the null subcarrier pattern according to the embodiment of the present invention.
In the first to fourth generation methods (FIGS. 5, 8, 11, 12, and 13) of the null subcarrier pattern, a null pattern has been generated by defining a numerical sequence of a basic pattern of null subcarriers. On the other hand, in the fifth generation method of the null subcarrier pattern, a subcarrier pattern for each transmitter is generated by defining a generating function f(x) instead of a numerical sequence of the basic pattern. In the generating function, a plurality of x values for y=f(x) may exist. That is, an inverse function may not exist. For example, a Hash function may be used as the generating function. For the generating function y=f(x), x and y are integers from 1 to the number of subcarriers.
When a reference signal pattern is denoted by P and the number of null subcarriers is denoted by Nn, the null subcarrier pattern B is determined as follows. P and B are sets.

First, the null subcarrier pattern generation unit 1008 set i=1 and sets B as a null set (step S501).
Then, the null subcarrier pattern generation unit 1008 determines whether or not f(i) is an element of P (step S502). When f(i) is an element of P, the null subcarrier pattern generation unit 1008 determines "YES" in step S502, sets i=i+1 (step S503), and proceeds to step S502.
On the other hand, when f(i) is not an element of P, the null subcarrier pattern generation unit 1008 determines "NO" in step S502, adds f(i) to B (step S504), and proceeds to step S505.

Then, the null subcarrier pattern generation unit 1008 determines whether or not a set size of B is smaller than Nn (step S505). When the set size of B is smaller than Nn, the null subcarrier pattern generation unit 1008 determines "YES" in step S505, sets i=i+1 (step S506), and proceeds to step S502.
On the other hand, when the set size of B is equal to or greater than Nn, the null subcarrier pattern generation unit 1008 determines "NO" in step S505, adds f(i) to B (step S507), and proceeds to step S508.

Then, the null subcarrier pattern generation unit 1008 determines whether or not the set size of B is smaller than Nn (step S508). When the set size of B is smaller than Nn, the null subcarrier pattern generation unit 1008 determines "YES" in step S508, sets i=i+1 (step S509), and proceeds to step S502.
On the other hand, when the set size of B is equal to or greater than Nn, the null subcarrier pattern generation unit 1008 determines "NO" in step S508, and sets B as the null subcarrier pattern (step S510). Then, the process of the flowchart of FIG. 13 is ended.

The above-described fifth generation method of the null subcarrier pattern is an example of generating a subcarrier pattern for each transmitter by defining a generating function f(x) instead of a numerical sequence of the basic pattern for the first generation method of the null subcarrier pattern. The fifth generation method of the null subcarrier pattern may be applied to the second to fourth generation methods of the null subcarrier pattern.
As long as the generating function f(x) is defined as described above, it is not necessary to store the basic pattern in the memory of the transmitter 10a or the receiver 20a and the effect of memory reduction is achieved.

Next, a method of generating a basic pattern of null subcarriers will be described.
The basic pattern of null subcarriers is used to generate the null subcarrier pattern, and is a numerical sequence having a use priority, not a simple set. Hereinafter, the basic pattern of null subcarriers will be described. The basic pattern of null subcarriers is designed so that a null subcarrier pattern generated based on the basic pattern of null subcarriers is uniformly distributed on the frequency axis. That is, when subcarriers whose number corresponds to the number of null subcarriers are determined according to the use priority, the subcarriers are designed to be uniformly distributed. Even when an element corresponding to a reference signal is excluded, a design is made to maintain the characteristics thereof.

FIG. 14 is a diagram illustrating a first generation method of a basic pattern of null subcarriers according to the embodiment of the present invention. In the first generation method of the basic pattern of null subcarriers, when the number of subcarriers is M=2^{∧}m, a basic null subcarrier pattern is set as [0, 2^{∧}(m-1), 2^{∧}(m-2), 2^{∧}(m-1)+2^{∧}(m-2), 2^{∧}(m-3), 2^{∧}(m-1)+2^{∧}(m-3), 2^{∧}(m-2)+2^{∧}(m-3), 2^{∧}(m-1)+2^{∧}(m-2)+2^{∧}(m-3), ...]. Also, denotes a power.
In other words, (0 to M-1) are converted into binary numbers, and sequences thereof are reversed and returned to decimal numbers.

FIG. 15 is a diagram showing a distribution of a basic null subcarrier pattern when the first generation method of a basic pattern of null subcarriers has been used according to the embodiment of the present invention. In FIG. 15, the number of subcarriers is 1024. In FIG. 15, the horizontal axis represents a null use priority and the vertical axis represents a subcarrier number.

In the first generation method of a basic pattern of null subcarriers, an interval between subcarrier numbers of adjacent use priorities may be increased. As seen from FIG. 15, the generated pattern may be uniformly distributed and the null subcarriers may be distributed regardless of the number of used null subcarriers.

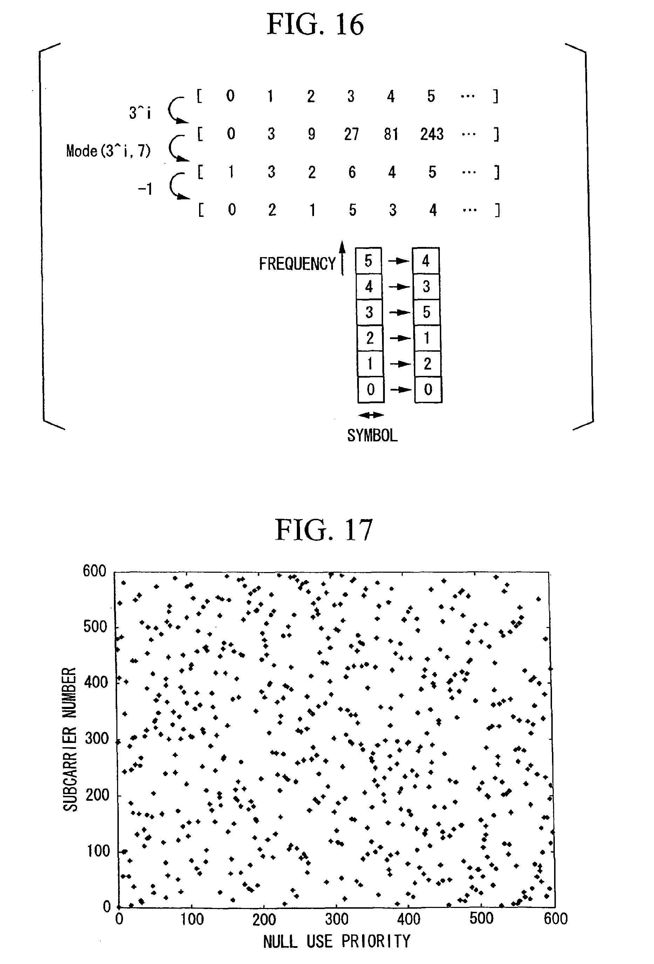

FIG. 16 is a diagram illustrating a second generation method of the basic pattern of null subcarriers according to the embodiment of the present invention. In the second generation method of a basic pattern of null subcarriers, the number of subcarriers, M, is a prime number p-1 and a basic null subcarrier pattern is mod(q^{∧}i, p)-1. Only, q is a primitive element of a definite field GF(p).

FIG. 17 is a diagram showing a distribution of a basic null subcarrier pattern when the second generation method of a basic pattern of null subcarriers has been used according to the embodiment of the present invention. In FIG. 17, when the number of subcarriers is 600, p=601 and q=297 are computed. In FIG. 17, the horizontal axis represents a null use priority and the vertical axis represents a subcarrier number.
In the second generation method of the basic pattern of null subcarriers, an interval between subcarrier numbers of use priorities is random. It is seen from the distribution diagram that a bias exists. In the second generation method of the basic pattern of null subcarriers, different basic null subcarrier patterns may be generated by changing a value of q. In this case, since the bias of the distribution diagram is also different, it is effective when a plurality of basic null subcarrier patterns is used.

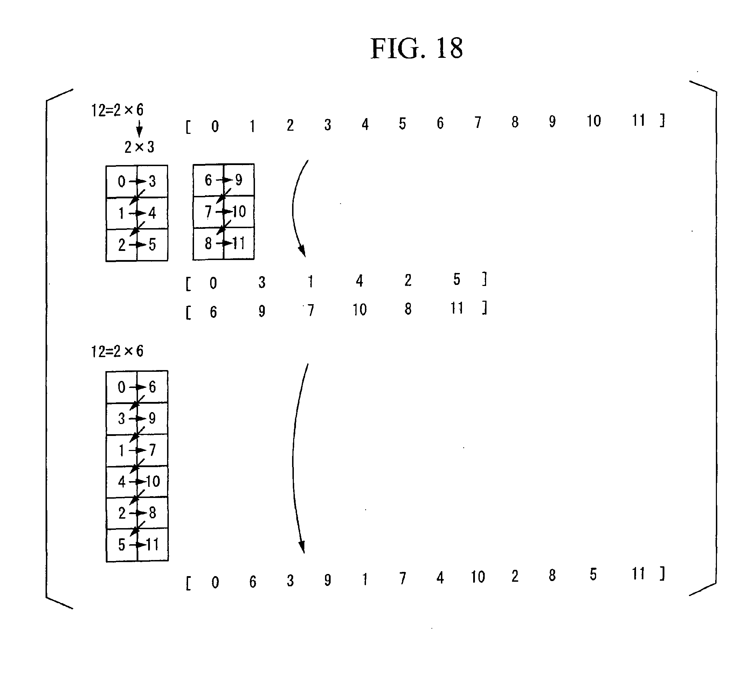

FIG. 18 is a diagram illustrating a third generation method of the basic pattern of null subcarriers according to the embodiment of the present invention. In the third generation method of the basic pattern of null subcarriers, a numerical sequence [x0, [x1, [x2, ··· [xn-1, xn] ···] generated by a multi-stage interleaving technique is used in the case where M=x0*x1*x2*···xn when the number of subcarriers, M, is factorized into prime numbers. Only,x0≤x1≤x2≤···≤xn.

FIG 18 is an example of N=2*2*3=12. First, since 12=2*6, the numerical sequence is divided into two groups of the first half [0, 1, 2, 3, 4, 5] and the second half [6, 7, 8, 9, 10, 11] as shown in an upper portion of FIG. 18. Since 6=2*3 as the next groups capable of being divided, they are arranged in the mass of 2x3 as shown in an upper portion of FIG. 18 and a numerical sequence of each group is interchanged in order of arrows of the figure. Consequently, the first half of the numerical sequence becomes [0, 3, 1, 4, 2, 5] and the second half becomes [6, 9, 7, 10, 8, 11].
Next, the first and second halves of the interchanged numerical sequence are arranged in the mass of 2x6 as a lower portion of FIG. 18, and the numerical sequence is interchanged in order of arrows of the figure as in the previous process. Consequently, a desired numerical sequence [0, 6, 3, 9, 1, 7, 4, 10, 2, 8, 5, 11] is obtained.

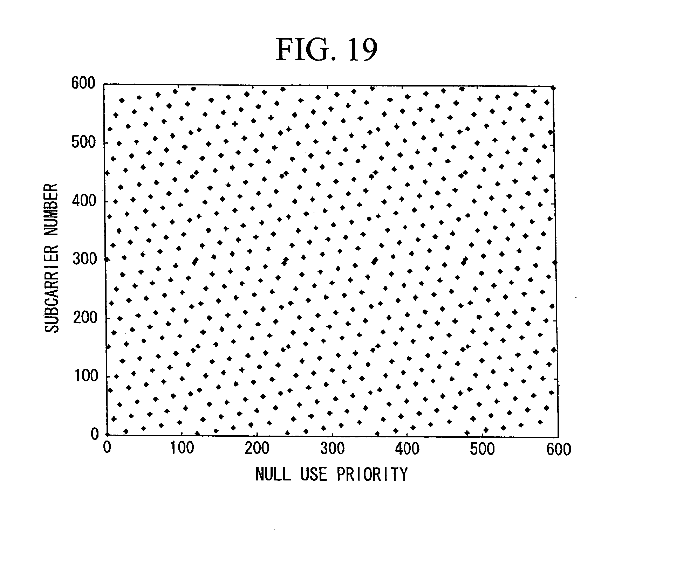

FIG. 19 is a diagram showing a distribution of a basic null subcarrier pattern when the third generation method of the basic pattern of null subcarriers has been used according to the embodiment of the present invention. In FIG. 19, when the number of subcarriers is 600, x0=x1=x2=2, x3=3, and x4=x5=5. In FIG. 19, the horizontal axis represents a null use priority and the vertical axis represents a subcarrier number.
It is seen that a similar pattern is regularly repeated in a distribution diagram of the third generation method of the basic pattern of null subcarriers. That is, even though the entire numerical sequence of basic null subcarriers is not stored in the transmitter 10a or the receiver 20a, it is possible to easily generate a subsequent sequence by storing a part of the numerical sequence of basic null subcarriers in memory.
In an example of N=12, only [0, 6, 3, 9] is stored and the next sequence of [1, 7, 4, 10] is generated by adding 1 to each element of [0, 6, 3, 9]. The next sequence of [2, 8, 5, 11] is generated by adding 1 to each element of [1, 7, 4, 10].

For example, one basic pattern generated by the first to third generation methods of the basic pattern of null subcarriers as a method of generating the basic pattern of null subcarriers is used by a receiver and a transmitter. It is possible to constitute three basic patterns including a pattern of the basic pattern itself set as a basic pattern 1, a pattern, which has the first/third at the beginning, set as a basic pattern 2, and a pattern, which has the second/third at the beginning, set as a basic pattern 3.

Next, a type of basic pattern and a notification method will be described.
Even though the basic pattern of null subcarriers is identical in a plurality of base stations, a null subcarrier pattern is also different when a reference signal pattern is different. That is, it is possible to use a common basic pattern in all transmitters and receivers within a system and use a null subcarrier pattern corresponding to a cell-specific reference signal.
In this case, when the number of null subcarriers is determined in response to a power boost amount of a reference signal, a null subcarrier pattern is determined in response to a reference signal pattern and the power boost amount. That is, it is not necessary to provide a special means of reporting the null subcarrier pattern in the transmitter. The number of null subcarriers may be directly reported from the transmitter to the receiver.
Alternatively, several types of basic patterns may be set and the basic pattern may be reported to the receiver using control information of several bits.

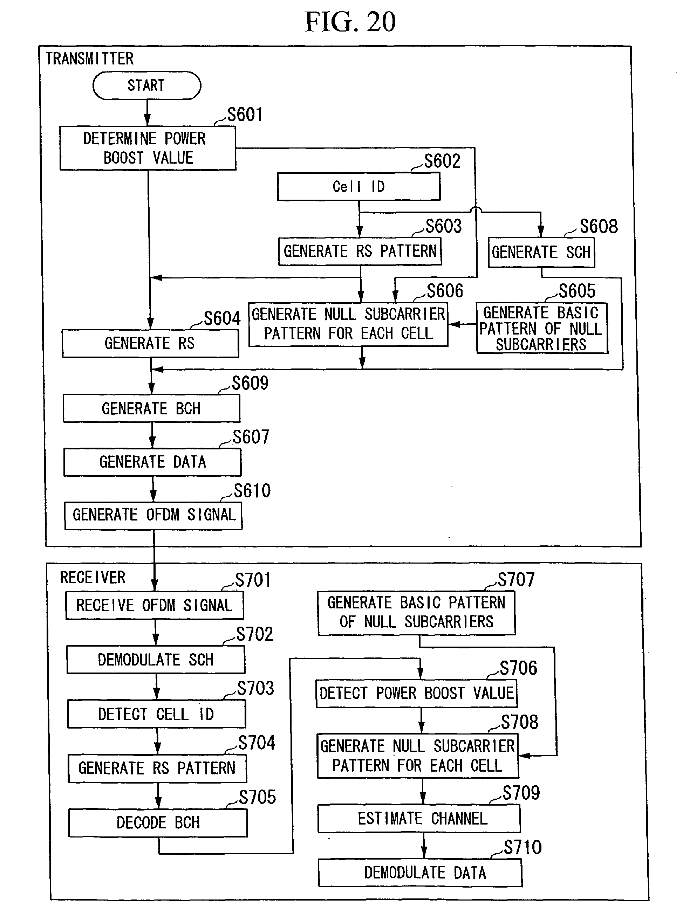

FIG. 20 is a sequence diagram showing a process of the communication system 300 (FIG. 1) of the present invention. In FIG. 20, a process of steps S601 to S610 is performed by the transmitter and a process of steps S701 to S710 is performed by the receiver.
Here, the case where a power boost value is reported from the transmitter to the receiver using a broadcast channel (BCH) will be described. The transmitter determines a reception situation of a signal transmitted from the receiver and determines a power boost value of a reference signal (step S601).

On the other hand, based on a cell ID unique for the transmitter as a base station (step S602), the transmitter generates a reference signal pattern (step S603). The transmitter generates a reference signal to be actually transmitted to the receiver from the power boost value and the reference signal pattern (step S604). Aside from this, the transmitter generates a basic pattern of null subcarriers based on a predetermined rule (step S605). The transmitter generates a null subcarrier pattern for each cell based on the basic pattern, the above-described reference signal pattern, and the number of null subcarriers determined from the power boost value (step S606).

The transmitter generates data by arranging modulated data to resource elements according to the RS pattern and the arrangement determined from the null subcarrier pattern for each cell (step S607). When the data is generated, the transmitter generates a synchronization channel (SCH) including a cell ID information for demodulation of the receiver (step S608). Also, the transmitter generates a broadcast channel (BCH) including power boost information (step S609). Thereby an OFDM signal is generated (step S610). The transmitter transmits the OFDM signal to the receiver.

The receiver receives the OFDM signal transmitted from the transmitter (step S701). The receiver demodulates the synchronization channel (SCH) including a primary-SCH and a secondary-SCH (step S702). Then, the receiver detects the cell ID included in demodulated data (step S703) and generates the RS pattern (step S704). Next, the receiver decodes the broadcast channel (BCH) (step S705). Then, the receiver detects system information such as a system bandwidth and a power boost value of a reference signal (step S706).

On the other hand, the receiver generates a basic pattern of null subcarriers based on a predetermined rule (step S707). Using the RS pattern, the power boost value, and the basic pattern of null subcarriers, the receiver performs the same process as the transmitter, and generates a null subcarrier pattern for each cell (step S708). The receiver specifies a data symbol arrangement based on the reference signal pattern for each cell and the null subcarrier pattern for each cell. The receiver estimates a channel from the reference signal (step S709) and demodulates a data symbol based on an estimation value (step S7710).

As a method of reporting control information including the basic pattern of null subcarriers from the transmitter to the receiver, the following method may be used.
For example, in addition to the above-described information, the secondary-SCH includes bits indicating pattern information of null subcarriers. For example, it is desirable to add 2 bits for 4 patterns. In this case, during a cell search, the receiver as a mobile station may receive a null subcarrier pattern. Accordingly, the transmitter may use null subcarriers even when the broadcast channel (BCH) is transmitted to the receiver.

As the similar method, a method of adding pattern information to a PCFICH (Physical Control Format Indicator CHannel) may be used. In this case, it is possible to apply null subcarriers at the time of transmitting control information. In addition, the PCFICH is used to report the number of symbols of a PDCCH (Physical Downlink Control Channel) from the transmitter to the receiver.

As another method, it is possible to use a method of adding bits indicating null subcarrier pattern information to the broadcast channel (BCH) in which the number of bits is greater than the number of bits capable of being transmitted and sending a notification from the transmitter to the receiver.
In a notification method using the broadcast channel (BCH), the primary-SCH may be used and a DBCH (Dynamic-BCH) may be used. By using the above method, it is possible for the receiver to acquire the null subcarrier pattern information from the transmitter from the time of acquisition by the secondary-SCH during the cell search or the time of acquiring system information of the cell. In this regard, these channels should be received in a previous step of obtaining information of a null subcarrier pattern, and it is necessary to prevent null subcarriers from being allocated to subcarriers to be used for the transmission of the broadcast channel (BCH).

As described above, there may be subcarriers to which null subcarriers as well as reference signals are prevented from being allocated. As a workaround plan, it is possible to use (1) a method of generating a basic null subcarrier pattern pre-excluding a specific frequency to which control information of the broadcast channel (BCH) or the like is allocated, (2) a method of applying the above-described generation method by adding subcarriers of a specific frequency to which control information of the broadcast channel (BCH) or the like is allocated in the first to fifth generation methods of a subcarrier pattern to an RS pattern P, or the like.

As shown in Non-Patent Document 1, the transmitter generates a reference signal using the same reference signal sequence and the orthogonal sequence in a common cell ID group. That is, the same subcarrier is used for the reference signal in a cell of the common cell ID group (a sector within the same transmitter). When the same basic pattern is used by all cells, there is a possibility that the null pattern may be identical in all sectors within the same transmitter. Even though reference signals use the same subcarrier by allocating a different basic pattern within the same cell ID group, a different subcarrier may be used for null subcarriers. Thereby, it is possible to suppress inter-cell interference (or inter-sector interference) of the common cell ID group. Also, it is possible to distribute interference to a peripheral cell.

For detection of a primary-SCH in the above-described cell search procedure, one pattern is detected from a plurality of primary-SCH sequences. A primary-SCH sequence corresponds to a sector within the same transmitter. Accordingly, it is not necessary to newly add bits indicating null subcarrier pattern information even though a plurality of basic patterns is used by associating a basic pattern of null subcarriers to a primary-SCH sequence. Thereby, it is possible to avoid an increase in control information and processing.

In the above-described embodiment, a control process of the transmitter or the receiver may be performed by recording a program for implementing a function of each element of the transmitter or each element of the receiver to a computer readable recording medium and enabling a computer system to read and execute the program recorded to the recoding medium. The "computer system" used herein includes an OS and hardware, such as peripheral devices.

The "computer readable recording medium" is a portable medium such as a flexible disc, magneto-optical disc, ROM and CD-ROM, and a storage device, such as a hard disk, built in the computer system. Furthermore, the "computer readable recording medium" may also include a medium that dynamically holds a program for a short period of time, such as a communication line when a program is transmitted via a network such as the Internet or a communication network such as a telephone network, and a medium that holds a program for a fixed period of time, such as a volatile memory in a computer system serving as a server or client in the above situation. The program may be that for implementing part of the above functions, or the above functions may be implemented in combination with a program already recorded to the computer system.

The embodiments of the present invention have been described in detail with reference to the drawings. However, a specific configuration is not limited to the embodiments and may include any design within the scope of the claims without departing from the subject matter of the present invention.

### Industrial Applicability

The present invention is applicable to a transmitter, a receiver, a transmission method, and a reception method which prevent the throughput between a transmitter and a receiver from being decreased.

## Claims

1. A transmitter which communicates with a receiver, the transmitter comprising:
a null subcarrier allocation unit which allocates a null subcarrier based on a priority and a signal, the priority being for allocating a null subcarrier to each subcarrier, the priority being a ranking predetermined with the receiver, the signal being allocated to each subcarrier; and
a transmission unit which transmits the signal using the subcarrier allocated by the null subcarrier allocation unit as the null subcarrier to the receiver.

2. The transmitter according to claim 1,
wherein when a signal is allocated to a subcarrier to which a null subcarrier is allocated, the null subcarrier allocation unit does not allocate the null subcarrier to the subcarrier and allocates the null subcarrier to a subcarrier of the next priority.

3. The transmitter according to claim 1,
wherein when a signal is allocated to a subcarrier to which a null subcarrier is allocated, the null subcarrier allocation unit does not allocate the null subcarrier to the subcarrier and allocates the null subcarrier to a subcarrier adjacent to the subcarrier.

4. A transmitter which communicates with a receiver, the transmitter comprising:
a priority determination unit which determines a priority based on a rule, the priority being for allocating a null subcarrier to each subcarrier, the rule being predetermined with the receiver;
a null subcarrier allocation unit which allocates a null subcarrier based on the priority and a signal, the priority being determined by the priority determination unit, the signal being allocated to each subcarrier; and
a transmission unit which transmits the signal using the subcarrier allocated by the null subcarrier allocation unit as the null subcarrier to the receiver.

5. The transmitter according to claim 4,
wherein the priority determination unit determines the priority in order of subcarriers specified by 0, 2^{∧}(m-1), 2^{∧}(m-2), 2^{∧}(m-1)+2^{∧}(m-2), 2^{∧}(m-3), 2^{∧}(m-1)+2^{∧}(m-3), 2^{∧}(m-2)+2^{∧}(m-3), and 2^{∧}(m-1)+2^{∧}(m-2)+2^{∧}(m-3) when the number of subcarriers is 2^{∧}m.

6. The transmitter according to claim 4,
wherein the priority determination unit determines the priority in order of subcarriers specified by mode q^{∧}i, p)-1 when the number of subcarriers is a prime number p-1 and q is set to a primitive element of a definite field GF(p).

7. The transmitter according to claim 4,
wherein the priority determination unit determines the priority in order of subcarriers specified by a multi-stage interleaving technique expressed by [x0, [x1, [x2, ··· [xn-1, xn] ···] when the number of sub carriers is expressed by x0*x1*x2*···xn (only, x0≤x1≤x2≤···≤xn) at the time of factorizing the number of subcarriers into prime numbers.

8. The transmitter according to claim 4,
wherein the null subcarrier allocation unit allocates a null subcarrier according to the priority from predetermined subcarriers.

9. The transmitter according to claim 4,
wherein the priority determination unit determines the priority by selecting one rule from among a plurality of rules predetermined with the receiver.

10. The transmitter according to claim 9,
wherein the transmission unit transmits identification information of a rule determined by the priority determination unit to the receiver.

11. The transmitter according to claim 10,
wherein the transmission unit transmits the identification information to the receiver using a broadcast channel.

12. A receiver which communicates with a transmitter, the receiver comprising:
a reception unit which receives a signal from the transmitter; and
a null subcarrier specifying unit which specifies a subcarrier to which a null subcarrier is allocated based on a priority and a signal, the priority being for allocating a null subcarrier to each subcarrier, the priority being a ranking predetermined with the transmitter, the signal being allocated to each subcarrier among signals received by the reception unit.

13. The receiver according to claim 12,
wherein the null subcarrier specifying unit specifies a power boost value of a control signal transmitted from the transmitter and specifies the number of null subcarriers allocated to subcarriers based on the power boost value.

14. The receiver according to claim 13,
wherein the null subcarrier specifying unit specifies the power boost value of the control signal by demodulating an information bit set to a control signal.

15. The receiver according to claim 13,
wherein the null subcarrier specifying unit specifies the power boost value from the ratio of a reception level of a control signal and a reception level of a data signal.

16. The receiver according to claim 12,
wherein the null subcarrier specifying unit determines the priority by selecting one rule from among a plurality of rules predetermined with the transmitter.

17. The receiver according to claim 16,
wherein the reception unit receives identification information of a rule determined by the transmitter, and
wherein the null subcarrier specifying unit determines the priority by selecting one rule from among a plurality of rules based on the identification information received by the reception unit.

18. A transmission method using a transmitter which communicates with a receiver, the transmission method comprising:
allocating a null subcarrier based on a priority and a signal, the priority being for allocating a null subcarrier to each subcarrier, the priority being a ranking predetermined with the receiver, the signal being allocated to each subcarrier; and
transmitting the signal using the subcarrier allocated by the null subcarrier allocation as the null subcarrier to the receiver.

19. A transmission method using a transmitter which communicates with a receiver, the transmission method comprising:
determining a priority based on a rule, the priority being for allocating a null subcarrier to each subcarrier, the rule being predetermined with the receiver;
allocating a null subcarrier based on the priority and a signal, the priority being determined by the priority determination, the signal being allocated to each subcarrier; and
transmitting the signal using the subcarrier allocated by the null subcarrier allocation as the null subcarrier to the receiver.

20. A reception method using a receiver which communicates with a transmitter, the reception method comprising:
receiving a signal from the transmitter; and
specifying a subcarrier to which a null subcarrier is allocated based on a priority and a signal, the priority being for allocating a null subcarrier to each subcarrier, the priority being a ranking predetermined with the transmitter, the signal being allocated to each subcarrier among signals received by the reception.
